# EUROPEAN PATENT APPLICATION

(11) **EP 0 957 619 A1**
(43) Date of publication of application: **17.11.1999**
(21) Application number: 98401139.5
(22) Date of filing: 13.05.1998
(51) Int. Cl.: H04M 1/72

(54) **Environment sensitive notification means for portable terminal**

(71) Applicant: ALCATEL, 75008 Paris (FR)
(72) Inventor: Westerhuis, Frans Wietse Ijbele, 2000 Antwerp (BE)

(57) **Abstract**

A portable terminal (PT1, PT2) is equipped with notification type activation means (MSS, ASS1, CTRL1; PDE, ASS2, CTRL2) that automatically modify the type of notification of incoming calls - e.g. ringing, buzzing, flashing, vibrating, ... - of that portable terminal (PT1, PT2) if environmental conditions of the portable terminal (PT1, PT2) change. The notification type activation means (MSS, ASS1, CTRL1; PDE, ASS2, CTRL2) may for example contain a magnetic strip sensor (MSS) responsive to the presence of magnetic strips (MS1, MS2) in the close neighbourhood of the portable terminal (PT1), or a position determination element (PDE) responsive to the horizontal/vertical position of the portable terminal (PT2). By automatically modifying the type notification, incoming calls are always notified in the most appropriate way whatever the environment wherein the portable terminal (PT1, PT2) is used.

## Description

The present invention relates to a portable terminal as defined in the non-characteristic part of claim 1.

A portable terminal of this kind is well known in the art. Indeed, all commercially available portable terminals, for instance GSM (Global System for Mobile Communications) handsets, include one or more devices for notifying an incoming telephone call. Ringing or buzzing devices for example repetitively generate an audible signal notifying the incoming call, a LED (light emitting diode) or flashing device incorporated in the housing of the portable terminal on the other hand gives a visual indication of an incoming call. A vibrating element may be provided to generate a mechanical incoming call notification. Nowadays, most portable terminals are equipped with two or more of these devices, each capable of notifying an incoming call in another manner. In this way, the owner of the portable terminal is given the opportunity to select a notification type suitably adapted to the circumstances wherein he/she is using the terminal. To avoid disturbing participants to a meeting, the user of the portable terminal for instance will select a visual or mechanical notification type instead of an audible one as soon as he/she enters the meeting room. A visual indication is useless in circumstances where the portable terminal is not constantly within the area of vision of the owner and therefor, the owner will select the ringing notification type when he/she puts the portable terminal into the drawer of his/her desk. In circumstances where the portable terminal is in contact with the user's body, for instance when the terminal is in the pocket of the user's jacket, notification of incoming calls by vibration is preferable.

To change the notification type of known portable terminals, the user has to press a button or a combination of buttons. The user in other words is obliged to switch the notification type manually each time he/she enters a particular environment like a restaurant, a car, the office, a conference room, and so on. Usually, he/she forgets to switch the notification type. A consequence thereof is that an incoming call may not be answered because the user doesn't notice the notification (visual indication is not noticed because terminal is in drawer of desk) or the notification is disturbing other persons in the neighbourhood (ringing notification in meeting room). A portable terminal supporting several types of notification in other words requires the attitude of the user of constantly being aware of the selected notification type.

An object of the present invention is to provide a portable terminal of the above known type, but which allows notification suitably adapted to the circumstances without requiring the user to be permanently aware of the selected notification type.

According to the invention, this object is achieved by the portable terminal defined in claim 1.

In this way, by providing means which activate and/or de-activate notification types in response to environmental conditions, the way of notifying incoming calls is changed automatically when the environmental circumstances change and the notification type will always be suitably adapted to the environmental circumstances so that no incoming calls will remain unanswered and no other persons than the user are disturbed when a call comes in.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional optional feature of the present invention is defined in claim 2.

In this way, automatic changing of the notification type can be de-activated. This feature allows the user to return to manual control over the notification type in situations where he/she nevertheless prefers another type of notification than the one automatically selected by the terminal.

A first preferred embodiment of the present invention is defined in claim 3.

Indeed, if the portable terminal is equipped with a magnetic strip sensor, the presence of another magnetic strip in the neighbourhood of the terminal is sufficient to indicate a change in environmental conditions. A first magnetic strip, for instance mounted on the backside of chairs in a meeting room, may be associated with LED notification, so that all portable terminals in the meeting room, equipped with the magnetic strip sensor, automatically change to notification of incoming calls via the LED. Another magnetic strip, which the user carries in the pocket of his jacket, may be associated with notification via mechanical vibrations, and yet another magnetic strip, laying in the drawer of the user's desk, may be associated with ringing notification.

An advantageous additional feature of the first preferred embodiment of the present invention is defined by claim 4.

In this way, the portable terminal is enabled to handle conflict situations wherein two magnetic strips associated with different notification types, are in the terminal's neighbourhood. A visual notification type may for instance be given a higher priority than the ringing notification type, so that a portable terminal always changes to visual notification on entry of a meeting room, a restaurant or a cinema, even if the user carries in the pocket of his jacket a magnetic strip associated with audible notification.

Another feature of the first preferred embodiment of the present invention is defined in claim 5.

In this way, the terminal is sensitive for magnetic strips in its very close neighbourhood, reducing the probability for conflicting situations as described above severely.

A second preferred embodiment of the present invention is defined in claim 6.

Indeed, the position of the terminal usually is indicative of its environment and a position sensitive terminal consequently can adapt its notification type automatically to accord suitably with the environmental circumstances. A vertically positioned portable terminal for example usually is located within the pocket of a jacket so that notification via mechanical vibrations is preferred. A portable terminal, horizontally laying on the back side of its housing, usually lays on a desk or table so that visual notification, e.g. via a LED, becomes suitable.

A further feature of the second preferred embodiment is defined in claim 7.

Indeed, the position of the portable terminal may be selected out of a set of predetermined positions, for instance: a vertical upward position, a vertical downward position, a horizontal position on the backface of the terminal, or a horizontal position on the frontface of the terminal. Only with these predetermined positions, a suitable notification type is associated. The position of the portable terminal determined by the position determination element is always that predetermined position that best matches the actual position, which may for example be diagonal, so that it is always possible to associate a notification type therewith.

An additional feature of the second preferred embodiment is defined in claim 8.

In this way, by solely determining whether the terminal is in a vertical or horizontal position, the complexity of the position determining element is kept low.

The above mentioned and other objects and features of the invention will become more apparent and the invention itself will be best understood by referring to the following description of an embodiment taken in conjunction with the accompanying drawings wherein:
Fig. 1A and 1B show a first preferred embodiment PT1 of the portable terminal according to the present invention, having a magnetic strip sensor MSS;
Fig. 2 shows a block scheme of a notification type activating/de-activating arrangement incorporated in the first preferred embodiment PT1 of the present invention;
Fig. 3A and 3B show a second preferred embodiment PT2 of the portable terminal according to the present invention, having a position determination element PDE; and
Fig. 4 shows a block scheme of a notification type activating/de-activating arrangement incorporated in the second preferred embodiment PT2 of the present invention.

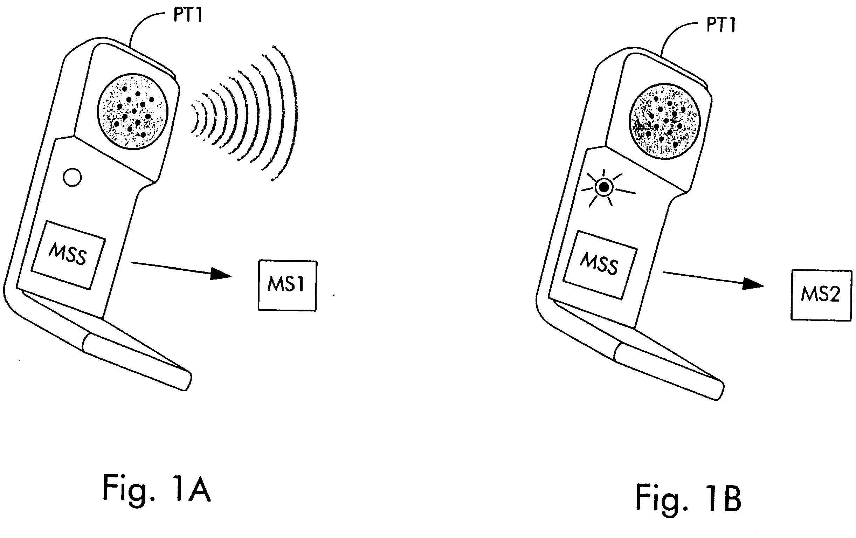

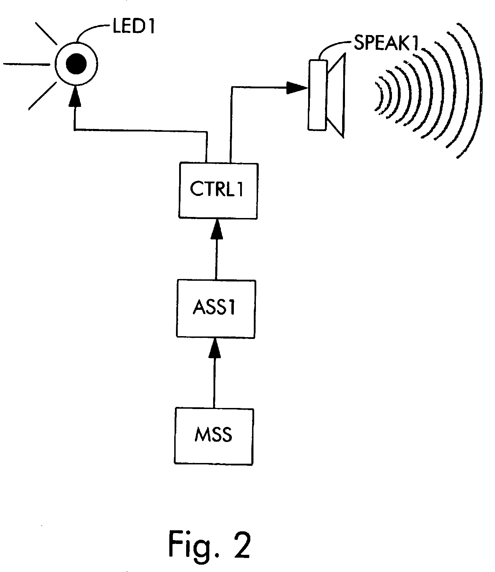

The portable terminal PT1 drawn in Fig. 1A and Fig. 1B is equipped with the arrangement drawn in Fig. 2, of which only the magnetic strip sensor MSS is shown in Fig. 1A and Fig. 1B. The arrangement, in addition to this magnetic strip sensor MSS, includes a notification type associating device ASS1 and a notification type control device CTRL1. The magnetic strip sensor MSS, the notification type associating device ASS1 and the notification type control device CTRL1 are cascade connected and the notification type control device CTRL1 has output ports interconnected with control ports of all notification devices of the portable terminal PT1. Two of these notification devices, a light emitting diode LED1 for flashing notification and a speaker SPEAK1 for ringing or buzzing notification, are drawn in Fig. 2. It is however assumed that the portable terminal PT1 at least also includes a vibrating notification device, not shown in Fig. 2, having a control input that is also interconnected with a port of the notification type control device CTRL1.

The magnetic strip sensor MSS of portable terminal PT1 senses the presence of magnetic strips, like MS1 in Fig. 1A or MS2 in Fig. 1B, within the close neighbourhood of the portable terminal PT1. Preferably, this close neighbourhood is within a distance of 15 cm from the portable terminal PT1. The magnetic strip sensor MSS identifies all magnetic strips within this close neighbourhood and informs the notification type associating device ASS1 of the magnetic strip or magnetic strips that are sensed. Anyhow, the maximum distance between the magnetic strip sensor MSS and magnetic strip MS1, MS2 should not be too large because of potential unwanted sensing of the magnetic strip by other portable terminals.

The notification type associating device ASS1 associates with each sensed magnetic strip a certain notification type. With the magnetic strip MS1, drawn in Fig. 1A, the notification type associating device ASS1 for instance associates the ringing notification whereas with the magnetic strip MS2, drawn in Fig. 1B, the notification type associating device ASS1 associates the flashing notification type. The associated notification type is communicated to the notification type control device CTRL1.

It is remarked that the notification type associating device ASS1 further is enabled to determine the magnetic strip with highest priority amongst all magnetic strips sensed within the close neighbourhood around the portable terminal PT1, and that the notification type associating device ASS1 informs the notification control device CTRL1 only of the notification type associated with the highest priority magnetic strip in case several magnetic strips are within the portable terminal's neighbourhood. The notification type associating device ASS1 in other words always informs the notification type control device CTRL1 of a unique selected notification type.

The notification type control device CTRL1 receives from the notification type associating device ASS1 information concerning the notification type to be activated. Via its control pods, the notification type control device CTRL1 will de-activate the notification type that is currently activate if the information received from the notification type associating device ASS1 indicates that another notification type has to become active. The notification type control device CTRL1 thereupon activates the newly selected notification type. If for instance flashing notification is active at the moment the magnetic strip sensor MSS senses the presence of magnetic strip MS1 of Fig. 1A, the notification type control device CTRL1 de-activates the light emitting diode LED1 and activates the speaker SPEAK1. Similarly, if ringing notification is active at the moment the magnetic strip sensor MSS in portable terminal PT1 senses the presence of magnetic strip MS2 of Fig. 1B in its neighbourhood, the notification type control device CTRL1 de-activates the speaker SPEAK1 and activates the light emitting diode LED1.

Each incoming call will be notified by the portable terminal PT1 in accordance with the notification type active at the moment the call comes in.

The embodiment PT1 of the present invention with magnetic strip sensor MSS is advantageous, in particular if the magnetic strips and their associated notification types are standardised and consequently uniform for all terminals equipped with such a magnetic strip sensor MSS. In that case, the owner of a public place like a restaurant, a hotel, a cinema, a conference room, and so on, can switch the notification type of all portable terminals in this public place by providing sufficient magnetic strips in the public place associated with a suitable notification type for that public place. Within a conference room for example, a magnetic strip MS2 associated with the flashing notification type may be attached to the back of each chair so that all portable terminals that enter the conference room automatically change their notification type to flashing notification, thereby avoiding that conference participants disturb each other when receiving incoming calls. The owner of the portable terminal PT1 may carry in the pocket of his/her jacket a magnetic strip associated with the vibrating notification type, so that when he/she leaves the conference room, carrying his/her portable terminal in his/her jacket, the notification type of the portable terminal PT1 automatically changes from flashing notification to vibrating notification. In this way, one avoids that an incoming call would not be noticed by the called person if his/her portable terminal PT1, when carried inside the pocket of a jacket, would still have the flashing notification type active. Inside a car, the car manufacturer or owner of the car, may provide a magnetic strip MS1 that is associated with the ringing notification so that the portable terminal PT1 always announces incoming calls in an audible way inside the car. Similarly, the owner of the portable terminal PT1 may drop a magnetic strip associated with the ringing or buzzing notification type inside the drawer of his desk so that incoming calls are notified in an audible way if he leaves his portable terminal PT1 inside this drawer.

The owner of the portable terminal PT1 may be given some magnetic strips at the time he buys the portable terminal PT1. Such a magnetic strip can be compared with the well-known magnetic strips inside books, coats, CD's to prevent theft. For each notification type a magnetic strip should exist. For each notification type, additional personalised characteristics can be configured in accordance with the user's needs or wishes. The frequency and intensity of notification for example are such parameters that can be personalised. The magnetic strip however only influences the notification type and not the personalised characteristics. The magnetic strip is placed typically inside the pocket of a iacket, can be attached to chairs in restaurants or conference rooms, can be carried in the belt that carries the portable terminal, and consequently should be small. Typically, the magnetic strip has a size of 1 mm x 20 mm x 0.1 mm.

The magnetic strip sensor MSS may sense the neighbourhood of the portable terminal PT1 permanently so that the notification type of the portable terminal PT1 is already suitably adapted when a call comes in and notification can immediately be invoked. Alternatively, the magnetic strip sensor MSS may sense the presence of magnetic strips in the neighbourhood of the portable terminal PT1 only when a call comes in. De-activation of a formerly active notification type and activation of the newly selected notification type then still has to be performed when the call comes in which means that notification of the incoming call to the called person is slightly delayed. The latter implementation however has the advantage that no power is consumed by the portable terminal PT1 for needless sensing the presence of magnetic strips and changing the notification type thereof.

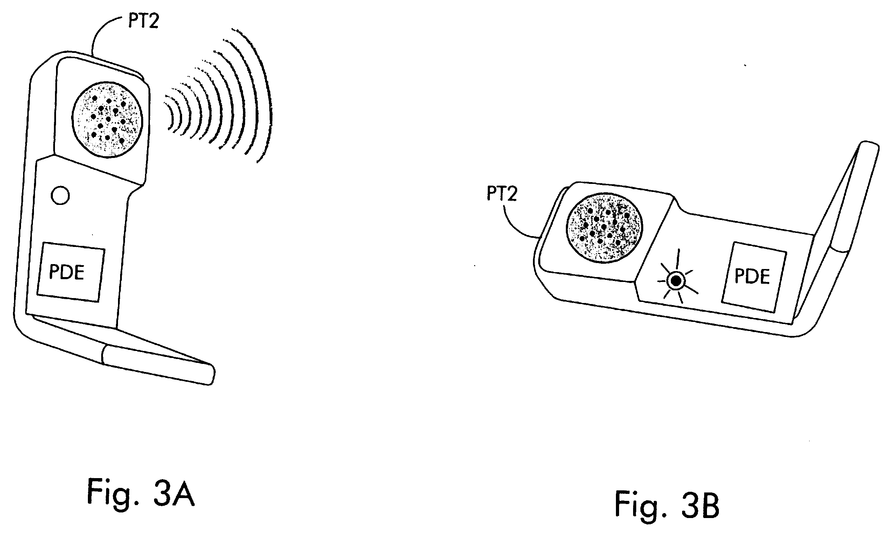

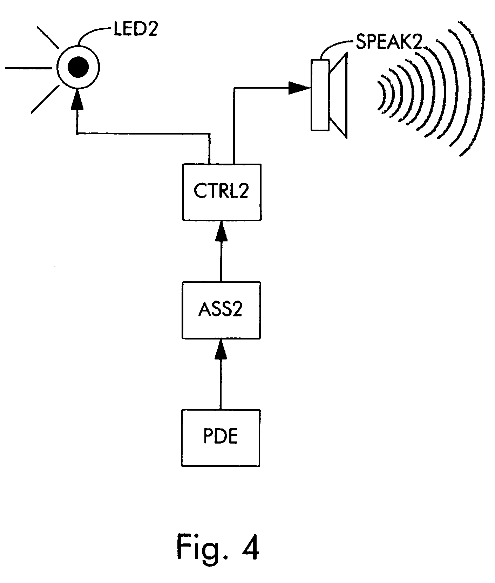

The portable terminal PT2 drown in Fig. 3A and Fig. 3B is equipped with the arrangement drawn in Fig. 4 of which only the position determination element PDE is shown in Fig. 3A and Fig. 3B. The arrangement, in addition to this position determination element PDE, includes a notification type associating device ASS2 and a notification type control device CTRL2. The position determination element PDE, the notification type associating device ASS2 and the notification type control device CTRL2 are cascade connected and the notification type control device CTRL2 has output ports interconnected with control ports of all notification devices of the portable terminal PT2. Two of these notification devices, a light emitting diode LED2 for flashing notification and a speaker SPEAK2 for ringing or buzzing notification, are drawn in Fig. 4. Similarly to portable terminal PT1, it is however assumed that the portable terminal PT2 at least also includes a vibrating notification device, not shown in Fig. 4, having a control input that is also interconnected with a port of the notification type control device CTRL2.

The position determination element PDE of portable terminal PT2 determines the position of the portable terminal PT2 relative to its close environment. This position may in general be vertically upward, vertically downward, horizontally on the backface of the terminal, horizontally on the frontface of the terminal, and so on, but for the sake of simplicity it is assumed that the position determination element PDE inside portable terminal PT2 only determines whether the terminal PT2 is in a horizontal or vertical position. The position determination element PDE informs the notification type associating device ASS2 of the position of the portable terminal PT2.

The notification type associating device ASS2 associates with each position of the portable terminal PT2 a certain notification type. With the vertical position of the portable terminal PT2, drawn in Fig. 3A, the notification type associating device ASS2 for instance associates the ringing notification whereas with the horizontal position of the portable terminal PT2, drawn in Fig. 3B, the notification type associating device ASS2 associates the flashing notification type. The associated notification type is communicated to the notification type control device CTRL2.

The notification type control device CTRL2 receives from the notification type associating device ASS2 information concerning the notification type to be activated. Via its control pods, the notification type control device CTRL2 will de-activate the notification type that is currently activate if the information received from the notification type associating device ASS2 indicates that another notification type has to become active. The notification type control device CTRL2 thereupon activates the newly selected notification type. If for instance flashing notification is active at the moment the position determination element PDE determines that the portable terminal PT2 is in the vertical position of Fig. 3A, the notification type control device CTRL2 de-activates the light emitting diode LED2 and activates the speaker SPEAK2. Similarly, if ringing notification is active at the moment the position determination element PDE determines that the portable terminal PT2 is in the horizontal position of Fig. 3B, the notification type control device CTRL2 de-activates the speaker SPEAK2 and activates the light emitting diode LED2.

Each incoming call will be notified by the portable terminal PT2 in accordance with the notification type active at the moment the call comes in.

Compared with the above described embodiment with magnetic strip sensor MSS, the embodiment of the present invention with position determination element PDE has the advantage that no magnetic strips have to be provided to modify the notification type of portable terminals within the neighbourhood of these magnetic strips. The second preferred embodiment in other words is even more user-friendly than the first preferred embodiment. Indeed, the arrangement of Fig. 4 changes the notification type autonomously without the necessity of any external influence as is required by the arrangement of Fig. 2. Furthermore, in the second preferred embodiment, possible interference between several magnetic strips is avoided.

The position determination element PDE may be aware of the position of the portable terminal PT2 relative to its environment permanently so that the notification type of the portable terminal PT2 is already suitably adapted when a call comes in and notification can immediately be invoked. Alternatively, the position determination element PDE may determine the position of the portable terminal PT2 relative to its environment only when a call comes in. De-activation of a formerly active notification type and activation of the newly selected notification type then still has to be performed when the call comes in which means that notification of the incoming call to the called person is slightly delayed. The latter implementation however has the advantage that no power is consumed by the portable terminal PT2 for needless determining its position and changing the notification type thereof.

It is remarked that both portable terminals, PT1 and PT2, are further equipped with a button to activate or de-activate automatic change of notification type. If automatic change of notification type is activated, the arrangements respectively drawn in Fig. 2 and Fig. 4 operate as described above whereas these arrangements remain inactive if automatic change of notification type is switched off via the button. In this way, the user of the portable terminal, PT1 or PT2, can still switch to manually changing the notification type.

It is further noticed that applicability of the present invention is not restricted to a particular kind of portable terminal. A person skilled in the art of mobile communications will be able to deduce from the above given explanation that the invention can be applied in a GSM (Global System for Mobile Communications) terminal, a DECT (Digital Enhanced Cordless Telecommunications) terminal, a DCS (Digital Communications System) terminal, a UMTS (Universal Mobile Telecommunications System) terminal or any other kind of portable terminal, and will be able to modify the above described arrangement in such a way that it can be integrated in such terminal.

Furthermore, it is remarked that the principles of the present invention are illustrated by describing the operation of the functional blocks of the arrangements drawn in Fig. 2 and Fig. 4. Each block drawn in this figure is described by explaining the functions it performs rather than by the electronic components it contains. From the given functional description however, any person skilled in the art of designing electronic components can develop detailed electronic circuitry realising these functions. For this reason, no further details with respect to the electronic components of the blocks were given.

Another remark is that although only two preferred embodiments are described above, it is clear that the basic idea of modifying the notification type of portable terminals automatically in response to environmental changes can be implemented in several other ways too. A temperature sensor for instance may be used to adapt the notification type of a portable terminal in response to temperature changes if the portable terminal is used in an environment wherein the notification type can be suitably adapted on the basis of temperature measurements. Via temperature measurements it can for instance be sensed whether the portable terminal is used outdoor or indoor and other types of notifying incoming calls may be suitable for outdoor and indoor portable terminals. A clock or timer may be used to change the notification type of a portable terminal if it is expected that the environmental conditions of the portable terminal will differ in function of time. In the morning and evening, when the portable terminal is used at home, the notification type may be likely to be different from the type of notification during the working hours of the owner of the terminal.

While the principles of the invention have been described above in connection with specific apparatus, it is to be clearly understood that this description is made only by way of example and not as a limitation on the scope of the invention.

## Claims

1. Portable terminal (PT1, PT2) enabled to receive incoming calls and including notification means (LED1, LED2, SPEAK1, SPEAK2) suitable for notifying said incoming calls in accordance with an activated notification type,
CHARACTERISED IN THAT said portable terminal (PT1, PT2) further comprises notification type activation means, responsive to environmental conditions and adapted to automatically de-activate said activated notification type and activate another notification type in response to a change in environmental conditions of said portable terminal (PT1, PT2).

2. Portable terminal (PT1, PT2) according to claim 1,
CHARACTERISED IN THAT said portable terminal (PT1, PT2) is equipped with means for manually de-activating said notification type activation means.

3. Portable terminal (PT1) according to claim 1 or 2,
CHARACTERISED IN THAT said notification type activation means comprises:
a. a magnetic strip sensor (MSS), adapted to sense the presence of a magnetic strip (MS1, MS2) within a close environment of said portable terminal (PT1);
b. associating means (ASS1), coupled to said magnetic strip sensor (MSS) for associating with said magnetic strip (MS1, MS2) said another notification type; and
c. control means (CTRL1), coupled to said associating means (ASS1) and adapted to de-activate said activated notification type and to activate said another notification type.

4. Portable terminal (PT1) according to claim 3,
CHARACTERISED IN THAT said portable terminal (PT1) further comprises means for selecting a single said another notification type in case a plurality of magnetic strips (MS1, MS2) are present within said close environment of said portable terminal (PT1), said single another notification type having a highest priority amongst notification types associated with said plurality of magnetic strips (MS1, MS2).

5. Portable terminal (PT1) according to claim 3 or 4,
CHARACTERISED IN THAT said close environment of said portable terminal (PT1) is within 15 cm from said portable terminal (PT1).

6. Portable terminal (PT2) according to claim 1 or 2,
CHARACTERISED IN THAT said notification type activation means comprises:
a. a position determination element (PDE), adapted to determine a position of said portable terminal (PT2) relative to its environment;
b. associating means (ASS2), coupled to said position determination element (PDE) for associating with said position said another notification type; and
c. control means (CTRL2), coupled to said associating means (ASS2) and adapted to de-activate said activated notification type and to activate said another notification type.

7. Portable terminal (PT2) according to claim 6,
CHARACTERISED IN THAT said position is a predetermined position of said portable terminal (PT2).

8. Portable terminal (PT2) according to claim 7,
CHARACTERISED IN THAT said position is either a horizontal or vertical position of said portable terminal (PT2).
